# EUROPEAN PATENT APPLICATION

(11) **EP 4 716 286 A1**
(43) Date of publication of application: **25.03.2026**
(21) Application number: 24818451.7
(22) Date of filing: 14.05.2024
(51) Int. Cl.: H04W 24/08

(54) **SENSING METHOD AND APPARATUS**

(30) Priority: 05.06.2023 CN 202310659978
(71) Applicant: Huawei Technologies Co., Ltd., Shenzhen, Guangdong 518129 (CN)
(72) Inventor: ZHANG, Ping, Shenzhen, Guangdong 518129 (CN); LUO, Jiajin, Shenzhen, Guangdong 518129 (CN); YU, Yang, Shenzhen, Guangdong 518129 (CN); PENG, Xiaohui, Shenzhen, Guangdong 518129 (CN); SU, Hongtao, Xi'an, Shaanxi 710071 (CN); MAO, Zhi, Xi'an, Shaanxi 710071 (CN); HE, Xuezhen, Xi'an, Shaanxi 710071 (CN)
(74) Representative: Pfenning, Meinig & Partner mbB
(86) International application number: PCT/CN2024/093194
(87) International publication number: WO 2024/250918

(57) **Abstract**

This application provides a sensing method and an apparatus, to reduce a computational amount of a communication system, relating to the field of wireless communication technologies. In the method, a first communication apparatus receives super-resolution capability information from i second communication apparatuses, where the super-resolution capability information indicates sensing resolution of the second communication apparatus, and i is an integer greater than or equal to 2. The first communication apparatus obtains information about a super-resolution region, where the super-resolution region is used by the i second communication apparatuses to perform super-resolution sensing, and the super-resolution region is determined by a third communication apparatus with optimal sensing resolution in the i second communication apparatuses. The first communication apparatus sends the information about the super-resolution region. Based on the foregoing solution, the first communication apparatus may determine the information about the super-resolution region, so that the second communication apparatus may perform super-resolution sensing in the super-resolution region, to reduce operation complexity and improve sensing efficiency while ensuring sensing accuracy as much as possible.

## Description

### CROSS-REFERENCE TO RELATED APPLICATIONS

This application claims priority to Chinese Patent Application No. 202310659978.8, filed with the China National Intellectual Property Administration on June 5, 2023 and entitled "SENSING METHOD AND APPARATUS", which is incorporated herein by reference in its entirety.

### TECHNICAL FIELD

This application relates to the field of wireless communication technologies, and in particular, to a sensing method and an apparatus.

### BACKGROUND

A super-resolution via compressed sensing technology states that as long as original signals themselves meet sparsity conditions or in a transform domain, a measurement matrix may be used to compress high-dimensional signals to low-dimensional space, and then the original signals may be accurately restored from the low-dimensional space by using a reconstruction algorithm. Such a signal compression and collection method breaks constraints of the Nyquist sampling theorem in conventional compression sampling approaches, offering great advantages in broadband signal processing and greatly reducing costs of signal processing, transmission, and storage.

However, although the current super-resolution via compressed sensing technology can achieve parameter estimation effect surpassing conventional resolution limits, its extensive parameter search space results in enormous computational complexity and low real-time performance.

### SUMMARY

This application provides a sensing method and an apparatus, to reduce a computational amount of a communication system without affecting target sensing accuracy as much as possible.

According to a first aspect, a sensing method is provided. The method may be performed by a first communication apparatus. The first communication apparatus may be a terminal device or a network device, or may be a chip/chip system used in the terminal device or the network device. In the method, a first communication apparatus receives super-resolution capability information from i second communication apparatuses, where the super-resolution capability information indicates sensing resolution of the second communication apparatus, and i is an integer greater than or equal to 2. The first communication apparatus obtains information about a super-resolution region, where the super-resolution region is used by the i second communication apparatuses to perform super-resolution sensing, and the super-resolution region is determined by a third communication apparatus with optimal sensing resolution in the i second communication apparatuses. The first communication apparatus sends the information about the super-resolution region.

Based on the foregoing solution, the first communication apparatus may determine the third communication apparatus with the optimal sensing resolution based on the sensing resolution carried in the super-resolution capability information, and obtain and send the information about the super-resolution region used to perform super-resolution sensing, so that the second communication apparatus may perform super-resolution sensing in the super-resolution region, to reduce operation complexity and improve sensing efficiency while ensuring sensing accuracy as much as possible.

In a possible implementation, the first communication apparatus sends request information to the third communication apparatus, where the request information is used to request the information about the super-resolution region. The first communication apparatus receives the information about the super-resolution region from the third communication apparatus.

In another possible implementation, the first communication apparatus receives the super-resolution capability information and the information about the super-resolution region from the i second communication apparatuses. Each second communication apparatus may determine information about a super-resolution region. The first communication apparatus may determine the information about the super-resolution region determined by the third communication apparatus with the optimal sensing resolution, and send the information about the super-resolution region determined by the third communication apparatus.

Based on the foregoing solution, the first communication apparatus may receive the information about the super-resolution region from the third communication apparatus with the optimal sensing resolution, to determine the super-resolution region with high accuracy.

In a possible implementation, the first communication apparatus sends the information about the super-resolution region to a second communication apparatus other than the third communication apparatus in the i second communication apparatuses.

Based on the foregoing solution, because the information about the super-resolution region is determined by the third communication apparatus, to reduce a waste of a transmission resource and a waste of a processing resource, the information about the super-resolution region may not be sent to the third communication apparatus.

In a possible implementation, the sensing resolution includes one or more of range resolution, velocity resolution, and angular resolution. The super-resolution region includes one or more of a range super-resolution region, an angular super-resolution region, and a velocity super-resolution region.

Based on the foregoing solution, the second communication apparatus may perform super-resolution sensing in one or more dimensions such as a range, an angle, and a velocity, to improve sensing accuracy, and may perform sensing in a super-resolution region of each dimension, to reduce computation complexity.

In a possible implementation, the third communication apparatus meets one or more of the following conditions: angular resolution in the i second communication apparatuses is optimal, range resolution in the i second communication apparatuses is optimal, and velocity resolution in the i second communication apparatuses is optimal.

Based on the foregoing solution, the third communication apparatus may be a communication apparatus with optimal sensing resolution in at least one of the one or more dimensions such as the range, the angle, and the velocity. It may be understood that communication apparatuses with optimal sensing resolution in different dimensions may be a same communication apparatus or may be different communication apparatuses. For example, there are one or more third communication apparatuses.

In a possible implementation, the super-resolution region is determined based on a peak value, and the peak value is a maximum value of a target estimation result obtained by the third communication apparatus by performing echo signal processing. Based on the foregoing solution, the super-resolution region is determined based on the maximum value of the target estimation result. In this case, a probability of sensing a target in the super-resolution region is high, and accuracy of the super-resolution region can be improved.

In a possible implementation, that the super-resolution region is determined based on the peak value includes one or more of the following 1 to 3:
1. The super-resolution region includes the range super-resolution region, a center of the range super-resolution region is a range peak value obtained by the third communication apparatus by performing echo signal processing, a lower limit of the range super-resolution region is less than or equal to the range peak value, and an upper limit of the range super-resolution region is greater than or equal to the range peak value.
2. The super-resolution region includes the velocity super-resolution region, a center of the velocity super-resolution region is a velocity peak value obtained by the third communication apparatus by performing echo signal processing, a lower limit of the velocity super-resolution region is less than or equal to the velocity peak value, and an upper limit of the velocity super-resolution region is greater than or equal to the velocity peak value.
3. The super-resolution region includes the angular super-resolution region, a center of the angular super-resolution region is an angular peak value obtained by the third communication apparatus by performing echo signal processing, a lower limit of the angular super-resolution region is less than or equal to the angular peak value, and an upper limit of the angular super-resolution region is greater than or equal to the angular peak value.

Based on the foregoing solution, super-resolution regions in different dimensions may be determined based on maximum values of target estimation results in the different dimensions. Therefore, a probability of sensing a target in the super-resolution region in each dimension is high.

In a possible implementation, the first communication apparatus sends a super-resolution multiple, where the super-resolution multiple is determined based on the optimal sensing resolution. Based on the foregoing solution, the super-resolution multiple is determined based on the optimal sensing resolution, to enable the second communication apparatuses to be aligned with the optimal sensing resolution, to improve consistency of sensing results.

In a possible implementation, the first communication apparatus receives sensing results from the i second communication apparatuses, where the sensing results are obtained by the i second communication apparatuses by performing super-resolution sensing in the super-resolution region.

Based on the solution, the second communication apparatus may perform super-resolution sensing in the super-resolution region, so that operation complexity of the second communication apparatus can be reduced.

According to a second aspect, a sensing method is provided. The method may be performed by a second communication apparatus. The second communication apparatus may be a terminal device or a network device, or may be a chip/chip system used in the terminal device or the network device. In the method, the second communication apparatus sends super-resolution capability information to a first communication apparatus, where the super-resolution capability information indicates sensing resolution of the second communication apparatus, and the sensing resolution is used to determine optimal sensing resolution. The second communication apparatus receives information about a super-resolution region from the first communication apparatus, where the super-resolution region is used by the second communication apparatus to perform super-resolution sensing, and the super-resolution region is determined by a third communication apparatus with the optimal sensing resolution. The second communication apparatus sends a sensing result to the first communication apparatus, where the sensing result is obtained by the second communication apparatus by performing super-resolution sensing in the super-resolution region.

In a possible implementation, the second communication apparatus sends, to the first communication apparatus, the super-resolution capability information and the information about the super-resolution region determined by the second communication apparatus. The sensing resolution carried in the super-resolution capability information is used to determine the optimal sensing resolution.

In a possible implementation, the second communication apparatus receives a super-resolution multiple from the first communication apparatus, where the super-resolution multiple is determined based on the sensing resolution. It may be understood that the sensing result is obtained by the second communication apparatus by performing super-resolution sensing in the super-resolution multiple by using the super-resolution multiple.

In a possible implementation, the sensing resolution includes one or more of range resolution, velocity resolution, and angular resolution. The super-resolution region includes one or more of a range super-resolution region, an angular super-resolution region, and a velocity super-resolution region.

In a possible implementation, the super-resolution region is determined based on a peak value, and the peak value is a maximum value of a target estimation result obtained by the third communication apparatus by performing echo signal processing.

In a possible implementation, that the super-resolution region is determined based on the peak value includes one or more of the following 1 to 3:
1. The super-resolution region includes the range super-resolution region, a center of the range super-resolution region is a range peak value obtained by the third communication apparatus by performing echo signal processing, a lower limit of the range super-resolution region is less than or equal to the range peak value, and an upper limit of the range super-resolution region is greater than or equal to the range peak value.
2. The super-resolution region includes the velocity super-resolution region, a center of the velocity super-resolution region is a velocity peak value obtained by the third communication apparatus by performing echo signal processing, a lower limit of the velocity super-resolution region is less than or equal to the velocity peak value, and an upper limit of the velocity super-resolution region is greater than or equal to the velocity peak value.
3. The super-resolution region includes the angular super-resolution region, a center of the angular super-resolution region is an angular peak value obtained by the third communication apparatus by performing echo signal processing, a lower limit of the angular super-resolution region is less than or equal to the angular peak value, and an upper limit of the angular super-resolution region is greater than or equal to the angular peak value.

According to a third aspect, a sensing method is provided. The method may be performed by a third communication apparatus. The third communication apparatus may be a terminal device or a network device, or may be a chip/chip system used in the terminal device or the network device. In the method, the third communication apparatus sends super-resolution capability information to a first communication apparatus, where the super-resolution capability information indicates sensing resolution of the third communication apparatus, and the sensing resolution of the third communication apparatus is optimal. The third communication apparatus sends information about a super-resolution region to the first communication apparatus, where the super-resolution region is used to perform super-resolution sensing.

In a possible implementation, the third communication apparatus receives request information from the first communication apparatus, where the request information is used to request the information about the super-resolution region.

In a possible implementation, the third communication apparatus sends, to the first communication apparatus, the super-resolution capability information and the information about the super-resolution region determined by the third communication apparatus. The super-resolution capability information indicates the sensing resolution of the third communication apparatus, and the sensing resolution of the third communication apparatus is optimal.

In a possible implementation, the sensing resolution includes one or more of range resolution, velocity resolution, and angular resolution. The super-resolution region includes one or more of a range super-resolution region, an angular super-resolution region, and a velocity super-resolution region.

In a possible implementation, the super-resolution region is determined based on a peak value, and the peak value is a maximum value of a target estimation result obtained by the third communication apparatus by performing echo signal processing.

In a possible implementation, that the super-resolution region is determined based on the peak value includes one or more of the following 1 to 3:
1. The super-resolution region includes the range super-resolution region, a center of the range super-resolution region is a range peak value obtained by the third communication apparatus by performing echo signal processing, a lower limit of the range super-resolution region is less than or equal to the range peak value, and an upper limit of the range super-resolution region is greater than or equal to the range peak value.
2. The super-resolution region includes the velocity super-resolution region, a center of the velocity super-resolution region is a velocity peak value obtained by the third communication apparatus by performing echo signal processing, a lower limit of the velocity super-resolution region is less than or equal to the velocity peak value, and an upper limit of the velocity super-resolution region is greater than or equal to the velocity peak value.
3. The super-resolution region includes the angular super-resolution region, a center of the angular super-resolution region is an angular peak value obtained by the third communication apparatus by performing echo signal processing, a lower limit of the angular super-resolution region is less than or equal to the angular peak value, and an upper limit of the angular super-resolution region is greater than or equal to the angular peak value.

In a possible implementation, the super-resolution region includes the range super-resolution region. The third communication apparatus receives the angular super-resolution region and the velocity super-resolution region from the first communication apparatus. The third communication apparatus performs super-resolution sensing in the angular super-resolution region and the velocity super-resolution region.

In another possible implementation, the super-resolution region includes the angular super-resolution region. The third communication apparatus receives the range super-resolution region and the velocity super-resolution region from the first communication apparatus. The third communication apparatus performs super-resolution sensing in the range super-resolution region and the velocity super-resolution region.

In another possible implementation, the super-resolution region includes the velocity super-resolution region. The third communication apparatus receives the angular super-resolution region and the range super-resolution region from the first communication apparatus. The third communication apparatus performs super-resolution sensing in the angular super-resolution region and the range super-resolution region.

In another possible implementation, the super-resolution region includes the range super-resolution region and the angular super-resolution region. The third communication apparatus receives the velocity super-resolution region from the first communication apparatus. The third communication apparatus performs super-resolution sensing in the velocity super-resolution region.

In another possible implementation, the super-resolution region includes the range super-resolution region and the velocity super-resolution region. The third communication apparatus receives the angular super-resolution region from the first communication apparatus. The third communication apparatus performs super-resolution sensing in the angular super-resolution region.

In another possible implementation, the super-resolution region includes the angular super-resolution region and the velocity super-resolution region. The third communication apparatus receives the range super-resolution region from the first communication apparatus. The third communication apparatus performs super-resolution sensing in the range super-resolution region.

According to a fourth aspect, a communication apparatus is provided, and includes a processing unit and a transceiver unit.

The transceiver unit is configured to receive super-resolution capability information from i second communication apparatuses, where the super-resolution capability information indicates sensing resolution of the second communication apparatus, and i is an integer greater than or equal to 2. The processing unit is configured to obtain information about a super-resolution region, where the super-resolution region is used by the i second communication apparatuses to perform super-resolution sensing, and the super-resolution region is determined by a third communication apparatus with optimal sensing resolution in the i second communication apparatuses. The transceiver unit is further configured to send the information about the super-resolution region.

In a possible implementation, the transceiver unit is further configured to send request information to the third communication apparatus, where the request information is used to request the information about the super-resolution region. The transceiver unit is further configured to receive the information about the super-resolution region from the third communication apparatus.

In another possible implementation, the transceiver unit is specifically configured to receive the super-resolution capability information and the information about the super-resolution region from the i second communication apparatuses. Each second communication apparatus may determine information about a super-resolution region. The processing unit is specifically configured to determine the information about the super-resolution region sent by the third communication apparatus with the optimal sensing resolution. The transceiver unit is specifically configured to send the information about the super-resolution region determined by the third communication apparatus.

In a possible implementation, the transceiver unit is specifically configured to send the information about the super-resolution region to a second communication apparatus other than the third communication apparatus in the i second communication apparatuses.

In a possible implementation, the sensing resolution includes one or more of range resolution, velocity resolution, and angular resolution. The super-resolution region includes one or more of a range super-resolution region, an angular super-resolution region, and a velocity super-resolution region.

In a possible implementation, the third communication apparatus meets one or more of the following conditions: angular resolution in the i second communication apparatuses is optimal, range resolution in the i second communication apparatuses is optimal, and velocity resolution in the i second communication apparatuses is optimal.

In a possible implementation, there are one or more third communication apparatuses.

In a possible implementation, the super-resolution region is determined based on a peak value, and the peak value is a maximum value of a target estimation result obtained by the third communication apparatus by performing echo signal processing. Based on the foregoing solution, the super-resolution region is determined based on the maximum value of the target estimation result. In this case, a probability of sensing a target in the super-resolution region is high, and accuracy of the super-resolution region can be improved.

In a possible implementation, that the super-resolution region is determined based on the peak value includes one or more of the following 1 to 3:
1. The super-resolution region includes the range super-resolution region, a center of the range super-resolution region is a range peak value obtained by the third communication apparatus by performing echo signal processing, a lower limit of the range super-resolution region is less than or equal to the range peak value, and an upper limit of the range super-resolution region is greater than or equal to the range peak value.
2. The super-resolution region includes the velocity super-resolution region, a center of the velocity super-resolution region is a velocity peak value obtained by the third communication apparatus by performing echo signal processing, a lower limit of the velocity super-resolution region is less than or equal to the velocity peak value, and an upper limit of the velocity super-resolution region is greater than or equal to the velocity peak value.
3. The super-resolution region includes the angular super-resolution region, a center of the angular super-resolution region is an angular peak value obtained by the third communication apparatus by performing echo signal processing, a lower limit of the angular super-resolution region is less than or equal to the angular peak value, and an upper limit of the angular super-resolution region is greater than or equal to the angular peak value.

In a possible implementation, the transceiver unit is further configured to send a super-resolution multiple, where the super-resolution multiple is determined based on the optimal sensing resolution.

In a possible implementation, the transceiver unit is further configured to receive sensing results from the i second communication apparatuses, where the sensing results are obtained by the i second communication apparatuses by performing super-resolution sensing in the super-resolution region.

According to a fifth aspect, a communication apparatus is provided, and includes a processing unit and a transceiver unit.

The transceiver unit is configured to send super-resolution capability information to a first communication apparatus, where the super-resolution capability information indicates sensing resolution of the second communication apparatus, and the sensing resolution is used to determine optimal sensing resolution. The transceiver unit is further configured to receive information about a super-resolution region from the first communication apparatus, where the super-resolution region is used by the communication apparatus to perform super-resolution sensing, and the super-resolution region is determined by a third communication apparatus with the optimal sensing resolution. The processing unit is configured to perform super-resolution sensing in the super-resolution region. The transceiver unit is further configured to send a sensing result to the first communication apparatus, where the sensing result is obtained by the communication apparatus by performing super-resolution sensing in the super-resolution region.

In a possible implementation, the transceiver unit is specifically configured to send, to the first communication apparatus, the super-resolution capability information and the information about the super-resolution region determined by the communication apparatus. The sensing resolution carried in the super-resolution capability information is used to determine the optimal sensing resolution.

In a possible implementation, the transceiver unit is further configured to receive a super-resolution multiple from the first communication apparatus, where the super-resolution multiple is determined based on the sensing resolution. It may be understood that the sensing result is obtained by the communication apparatus by performing super-resolution sensing in the super-resolution multiple by using the super-resolution multiple.

In a possible implementation, the sensing resolution includes one or more of range resolution, velocity resolution, and angular resolution. The super-resolution region includes one or more of a range super-resolution region, an angular super-resolution region, and a velocity super-resolution region.

In a possible implementation, the super-resolution region is determined based on a peak value, and the peak value is a maximum value of a target estimation result obtained by the third communication apparatus by performing echo signal processing.

In a possible implementation, that the super-resolution region is determined based on the peak value includes one or more of the following 1 to 3:
1. The super-resolution region includes the range super-resolution region, a center of the range super-resolution region is a range peak value obtained by the third communication apparatus by performing echo signal processing, a lower limit of the range super-resolution region is less than or equal to the range peak value, and an upper limit of the range super-resolution region is greater than or equal to the range peak value.
2. The super-resolution region includes the velocity super-resolution region, a center of the velocity super-resolution region is a velocity peak value obtained by the third communication apparatus by performing echo signal processing, a lower limit of the velocity super-resolution region is less than or equal to the velocity peak value, and an upper limit of the velocity super-resolution region is greater than or equal to the velocity peak value.
3. The super-resolution region includes the angular super-resolution region, a center of the angular super-resolution region is an angular peak value obtained by the third communication apparatus by performing echo signal processing, a lower limit of the angular super-resolution region is less than or equal to the angular peak value, and an upper limit of the angular super-resolution region is greater than or equal to the angular peak value.

According to a sixth aspect, a communication apparatus is provided, and includes a processing unit and a transceiver unit.

The transceiver unit is configured to send super-resolution capability information to a first communication apparatus, where the super-resolution capability information indicates sensing resolution of the third communication apparatus, and the sensing resolution of the communication apparatus is optimal. The processing unit is configured to determine information about a super-resolution region, where the super-resolution region is used to perform super-resolution sensing. The transceiver unit is further configured to send the information about the super-resolution region to the first communication apparatus.

In a possible implementation, the transceiver unit is further configured to receive request information from the first communication apparatus, where the request information is used to request the information about the super-resolution region.

In a possible implementation, the transceiver unit is specifically configured to send the super-resolution capability information and the determined information about the super-resolution region to the first communication apparatus. The super-resolution capability information indicates the sensing resolution of the communication apparatus, and the sensing resolution of the communication apparatus is optimal.

In a possible implementation, the sensing resolution includes one or more of range resolution, velocity resolution, and angular resolution. The super-resolution region includes one or more of a range super-resolution region, an angular super-resolution region, and a velocity super-resolution region.

In a possible implementation, the super-resolution region is determined based on a peak value, and the peak value is a maximum value of a target estimation result obtained by the communication apparatus by performing echo signal processing.

In a possible implementation, that the super-resolution region is determined based on the peak value includes one or more of the following 1 to 3:
1. The super-resolution region includes the range super-resolution region, a center of the range super-resolution region is a range peak value obtained by the communication apparatus by performing echo signal processing, a lower limit of the range super-resolution region is less than or equal to the range peak value, and an upper limit of the range super-resolution region is greater than or equal to the range peak value.
2. The super-resolution region includes the velocity super-resolution region, a center of the velocity super-resolution region is a velocity peak value obtained by the communication apparatus by performing echo signal processing, a lower limit of the velocity super-resolution region is less than or equal to the velocity peak value, and an upper limit of the velocity super-resolution region is greater than or equal to the velocity peak value.
3. The super-resolution region includes the angular super-resolution region, a center of the angular super-resolution region is an angular peak value obtained by the communication apparatus by performing echo signal processing, a lower limit of the angular super-resolution region is less than or equal to the angular peak value, and an upper limit of the angular super-resolution region is greater than or equal to the angular peak value.

In a possible implementation, the super-resolution region includes the range super-resolution region. The transceiver unit is further configured to receive the angular super-resolution region and the velocity super-resolution region from the first communication apparatus. The processing unit is further configured to perform super-resolution sensing in the angular super-resolution region and the velocity super-resolution region.

In another possible implementation, the super-resolution region includes the angular super-resolution region. The transceiver unit is further configured to receive the range super-resolution region and the velocity super-resolution region from the first communication apparatus. The processing unit is further configured to perform super-resolution sensing in the range super-resolution region and the velocity super-resolution region.

In another possible implementation, the super-resolution region includes the velocity super-resolution region. The transceiver unit is further configured to receive the angular super-resolution region and the range super-resolution region from the first communication apparatus. The processing unit is further configured to perform super-resolution sensing in the angular super-resolution region and the range super-resolution region.

In another possible implementation, the super-resolution region includes the range super-resolution region and the angular super-resolution region. The transceiver unit is further configured to receive the velocity super-resolution region from the first communication apparatus. The processing unit is further configured to perform super-resolution sensing in the velocity super-resolution region.

In another possible implementation, the super-resolution region includes the range super-resolution region and the velocity super-resolution region. The transceiver unit is further configured to receive the angular super-resolution region from the first communication apparatus. The processing unit is further configured to perform super-resolution sensing in the angular super-resolution region.

In another possible implementation, the super-resolution region includes the angular super-resolution region and the velocity super-resolution region. The transceiver unit is further configured to receive the range super-resolution region from the first communication apparatus. The processing unit is further configured to perform super-resolution sensing in the range super-resolution region.

According to a seventh aspect, a communication apparatus is provided. The communication apparatus may be the communication apparatus in any one of the possible implementations of the third aspect to the sixth aspect in the foregoing embodiments, or a chip disposed in the communication apparatus in any one of the third aspect to the sixth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the first communication apparatus, the second communication apparatus, or the third communication apparatus in any one of the possible implementations of the first aspect to the third aspect.

It should be understood that the communication interface may be implemented by using an antenna, a feeder, a codec, or the like in the communication apparatus. Alternatively, if the communication apparatus is a chip disposed in the first communication apparatus, the second communication apparatus, or the third communication apparatus, the communication interface may be an input/output interface of the chip, for example, an input/output pin. The communication apparatus may further include a transceiver, used by the communication apparatus to communicate with another device.

According to an eighth aspect, an embodiment of this application provides a chip system. The chip system includes a processor, and may further include a memory, configured to implement the method performed by the first communication apparatus, the second communication apparatus, or the third communication apparatus in any one of the possible implementations of the first aspect to the third aspect. In a possible implementation, the chip system further includes the memory, configured to store program instructions and/or data. The chip system may include a chip, or may include a chip and another discrete component.

According to a ninth aspect, this application provides a computer-readable storage medium. The computer-readable storage medium stores a computer program or instructions. When the computer program or the instructions are run, the method performed by the first communication apparatus, the second communication apparatus, or the third communication apparatus in the foregoing aspects is implemented.

According to a tenth aspect, a computer program product is provided. The computer program product includes computer program code or instructions. When the computer program code or the instructions are run, the method performed by the first communication apparatus, the second communication apparatus, or the third communication apparatus in the foregoing aspects is performed.

According to an eleventh aspect, a communication apparatus is provided. The communication apparatus includes a unit or a module for performing the methods in the foregoing aspects.

According to a twelfth aspect, a chip system is provided, and includes a logic circuit and an input/output interface. The logic circuit is configured to perform the method performed by the first communication apparatus, the second communication apparatus, or the third communication apparatus. The input/output interface is configured to communicate with another apparatus.

According to a thirteenth aspect, a system is provided, and includes at least one first communication apparatus and at least one second communication apparatus. Optionally, the system may further include at least one third communication apparatus.

For beneficial effects of the second aspect to the thirteenth aspect and the implementations of the second aspect to the thirteenth aspect, refer to the descriptions of beneficial effects of the method in the first aspect and the implementations of the first aspect.

### BRIEF DESCRIPTION OF DRAWINGS

FIG. 1 is a diagram of a communication system according to an embodiment of this application;
FIG. 2 is a diagram of signal processing in a multistatic target positioning method;
FIG. 3 is an example flowchart of a sensing method according to an embodiment of this application;
FIG. 4A is a schematic flowchart of signal processing in a sensing method according to an embodiment of this application;
FIG. 4B is a schematic flowchart of signal processing in another sensing method according to an embodiment of this application;
FIG. 5 is a diagram of a communication apparatus according to an embodiment of this application;
FIG. 6 is a diagram of another communication apparatus according to an embodiment of this application;
FIG. 7 is a diagram of another communication apparatus according to an embodiment of this application; and
FIG. 8 is a diagram of another communication apparatus according to an embodiment of this application.

### DESCRIPTION OF EMBODIMENTS

For ease of understanding of the technical solutions provided in embodiments of this application, the following describes technical terms used in embodiments of this application.
(1) Super-resolution sensing states that as long as original signals themselves meet sparsity conditions or in a transform domain, a measurement matrix may be used to compress high-dimensional signals to low-dimensional space, and then the original signals may be accurately restored from the low-dimensional space by using a reconstruction algorithm. Super-resolution sensing may further use a method for compressing parameter search space, to improve algorithm efficiency.

A communication apparatus in embodiments of this application may be a network device, a terminal device (for example, a mobile phone or an uncrewed aerial vehicle), a transportation means (for example, a vehicle, a ship, an airplane, a robot, or an electric vehicle), or a wearable device (for example, glasses, a headset, a watch, or a head mount display (head mount display, HMD) device), or the communication apparatus may be a chip, a sensing device, or the like.

The network device is a device in a wireless network, for example, includes a radio access network (radio access network, RAN) node or a radio access network device that connects the terminal device to the wireless network. Currently, some examples of the access network device include a next generation NodeB (gNodeB, gNB) in 5G, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), integrated access and backhaul (integrated access and backhaul, IAB), and the like. In some implementations, the access network device may alternatively be an access network device in a future communication system (for example, a 6G communication system).

In a network structure, the network device may be a central unit (central unit, CU) or a distributed unit (distributed unit, DU), or the access network device may include a CU and a DU. The CU and the DU are separately disposed, or may be included in a same network element, for example, a BBU. It may be understood that the access network device is divided into the CU and the DU from the perspective of logical functions. The CU is connected to the DU through an F1 interface. On behalf of a gNB, the CU may be connected to a core network through an NG interface. The CU and the DU may be physically separated, or may be deployed together. This is not specifically limited in embodiments of this application. One CU may be connected to one DU, or a plurality of DUs may share one CU, so that costs can be reduced, and network extension can be easily performed. The CU and the DU may be separated based on a protocol stack. In a possible manner, a radio resource control (radio resource control, RRC) layer, a service data adaptation protocol stack (service data adaptation protocol, SDAP) layer, and a packet data convergence protocol (packet data convergence protocol, PDCP) layer are deployed on the CU, and a remaining radio link control (radio link control, RLC) layer, medium access control (medium access control, MAC) layer, physical layer (PHY), and the like are deployed on the DU. Embodiments of this application are not completely limited to the foregoing protocol stack separation manner, and there may be another separation manner.

In addition, the network device may alternatively be a radio unit (radio unit, RU, or the like). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU, the DU, or the RU may also have different names, but a person skilled in the art may understand meanings of the names. For example, in an open radio access network (open radio access network, O-RAN) system, the CU may be referred to as an O-CU (open CU), the DU may be referred to as an O-DU (open DU), and the RU may be referred to as an O-RU (open RU).

The terminal device may be a wireless terminal device that can receive scheduling and indication information of the network device. The wireless terminal device may be a device that provides users with voice and/or data connectivity, a handheld device having a wireless connection function, or another processing device connected to a wireless modem. The wireless terminal device may communicate with one or more core networks or the internet via a radio access network (radio access network, RAN). The wireless terminal device may be a mobile terminal device, such as a mobile phone (also referred to as a "cellular" phone or a mobile phone (mobile phone)), a computer, and a data card, for example, may be a portable, pocket-sized, handheld, computer built-in, or vehicle-mounted mobile apparatus that exchanges voice and/or data with the radio access network, for example, a device such as a personal communications service (personal communications service, PCS) phone, a cordless phone, a session initiation protocol phone, a wireless local loop (wireless local loop, WLL) station, a personal digital assistant (personal digital assistant, PDA), a tablet (Pad), or a computer with a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station device (subscriber station, SS), customer premises equipment (customer premises equipment, CPE), a terminal (terminal), user equipment (user equipment, UE), a mobile terminal (mobile terminal, MT), or the like. Alternatively, the wireless terminal device may be a wearable device and a next-generation communication system, for example, a terminal device in a 5G network, a terminal device in a future evolved PLMN network, or a terminal device in an NR communication system.

The following describes in detail embodiments of this application with reference to the accompanying drawings of the specification.

The technical solutions in embodiments of this application may be applied to a new radio (New Radio, NR) system, a global system for mobile communications (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD), a universal mobile telecommunications system (Universal Mobile Telecommunications System, UMTS), a worldwide interoperability for microwave access (Worldwide Interoperability for Microwave Access, WiMAX) communication system, a vehicle to everything (vehicle to everything, V2X) communication system, a device to device (device to device, D2D) communication system, and the like. This is not limited herein.

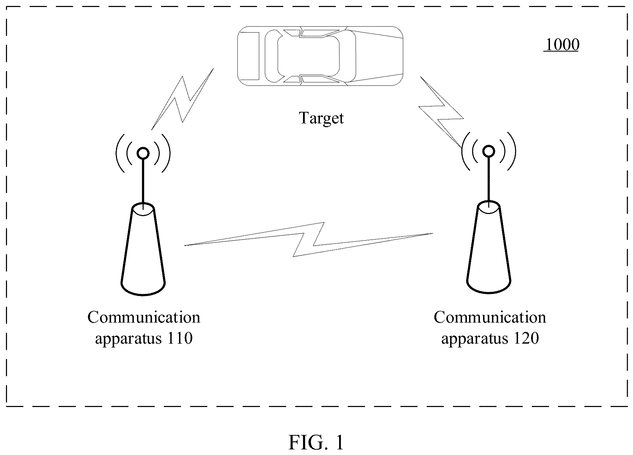

FIG. 1 is a diagram of an architecture of a communication system 1000 to which embodiments of this application are applied. As shown in FIG. 1, the communication system includes at least two communication apparatuses. For example, the communication system includes a communication apparatus 110 and a communication apparatus 120. The communication apparatus 110 and the communication apparatus 120 may sense a target. The communication apparatus 110 and the communication apparatus 120 may send sensing results to a fusion center, and the fusion center determines a position of the target based on the sensing results of the communication apparatus 110 and the communication apparatus 120.

An integrated sensing and communication system, also referred to as an integrated communication and sensing system, uses a plurality of communication base stations as sounding nodes to form a sensing network. Each base station has an active sounding mode of self-sending and self-receiving (monostatic), and has a passive sounding mode of using another base station as a radiation source (bistatic), and is an integrated active-passive sounding node. Each base station reports a sounding result to a fusion center for collaborative processing, and finally obtains a high-accuracy sounding result of a target. In an urban scenario, communication base stations are densely distributed. When an integrated sensing and communication system is constructed, adjacent base stations may form a base station network, which is similar to a bistatic/multistatic radar system in the radar field, to improve sensing performance of the system to some extent.

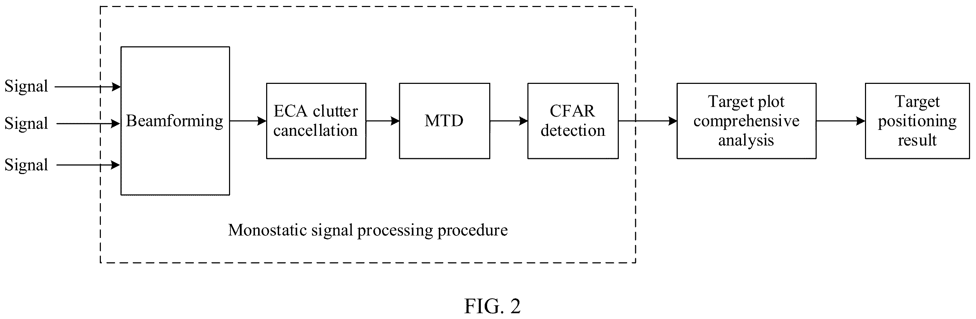

Refer to FIG. 2. A procedure of a multistatic target positioning method is described. First, a signal may be received, and the received signal is processed, to obtain preliminary parameter estimation on a target. Whether to perform clutter matching iterative cancellation processing is evaluated based on a monostatic multi-radiation source detection status, and if the clutter iterative cancellation processing needs to be performed, a preliminary parameter estimation result of the target is updated. Then, target plot information is analyzed comprehensively based on the preliminary multi-radiation source parameter estimation result of the target. Finally, the parameter estimation result of the target is updated, and a corresponding target positioning result is obtained.

In FIG. 2, a procedure of processing a received signal by a monostatic base station may include the following content.
(1) A beam is formed using digital beamforming (digital beamforming, DBF), to obtain an echo signal in a specific direction and store original data of a plurality of channels.
(2) A frequency-domain extensive cancellation algorithm (extensive cancellation algorithm, ECA) is used to implement clutter suppression on the received signal.
(3) A clutter-suppressed signal and a reference signal are segmented, and fast time-frequency two-dimensional coherent accumulation of the echo signal is realized through moving target detection (moving target detection, MTD) processing, to obtain a range-Doppler map (range-doppler map, RD map).
(4) Constant false alarm rate (constant false alarm rate, CFAR) detection is performed on the RD-map to implement target detection and obtain range-Doppler information of a possible target.
(5) A status of the target is calculated and output based on angle, range, and velocity information of the target.

However, in an urban environment, targets are densely distributed, and limited by an antenna aperture and a transmitted signal bandwidth, angular resolution and range resolution of the integrated sensing and communication system cannot meet a requirement of accurate positioning, and target positioning accuracy obtained by using the multistatic target positioning method needs to be further improved.

A super-resolution via compressed sensing theory states that as long as original signals themselves meet sparsity conditions or in a transform domain, a measurement matrix may be used to compress high-dimensional signals to low-dimensional space, and then the original signals may be accurately restored from the low-dimensional space by using a reconstruction algorithm. Such a signal compression and collection method breaks constraints of the Nyquist sampling theorem in conventional compression sampling approaches, offering great advantages in broadband signal processing, and greatly reducing costs of signal processing, transmission, and storage. Currently, there are usually two signal reconstruction algorithms for compressed sensing.
(1) Greedy iterative algorithm: The algorithm selects an optimal atom and reconstructs a signal by using a stepwise approximation method. Common algorithms include a matching pursuit algorithm, an orthogonal matching pursuit algorithm, a subspace matching pursuit algorithm, and the like.
(2) Convex optimization algorithm: The algorithm approximates a solution of a 0-norm to a 1-norm and then performs solving by using a linear programming method. Common algorithms include a gradient projection method, a basis pursuit method, a least angle regression method, and the like.

However, the current super-resolution via compressed sensing technology can provide a parameter estimation effect that is better than that of conventional resolution, but large parameter search space leads to a huge computational amount and low real-time performance. Therefore, a method that can be used to compress parameter search space is needed to improve algorithm efficiency. However, a quantity of spatial resolution units in the integrated sensing and communication system is large. If the super-resolution technology is used for all spatial resolution units covered by the system, the computational amount is huge and it is unnecessary.

In view of this, embodiments of this application provide a sensing method. In the method, i second communication apparatuses may send super-resolution capability information to a first communication apparatus, to indicate respective sensing resolution. The first communication apparatus may obtain information about a super-resolution region determined by a third communication apparatus with optimal sensing resolution, and send the information about the super-resolution region. The super-resolution region may be used by the second communication apparatus to perform super-resolution sensing. Based on the solution, the second communication apparatus may perform super-resolution sensing in the super-resolution region, to reduce operation complexity and improve sensing efficiency while ensuring sensing accuracy as much as possible.

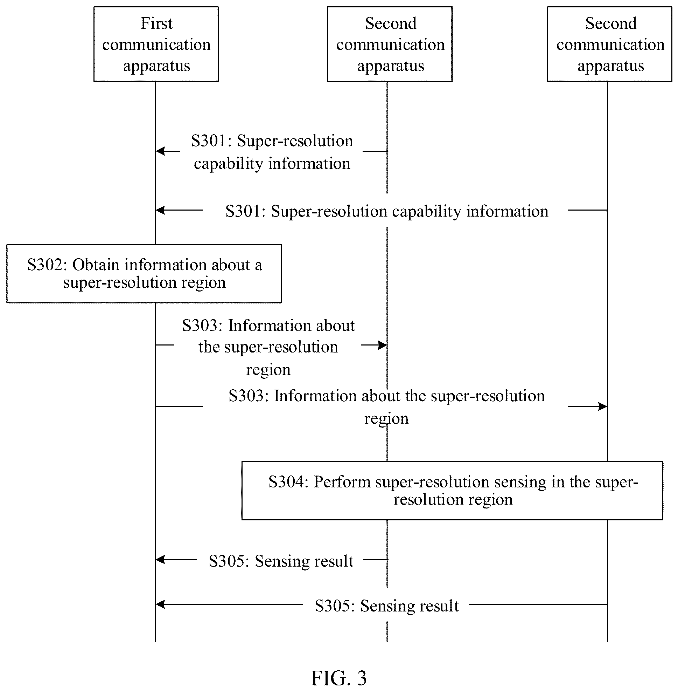

FIG. 3 is an example flowchart of a sensing method according to an embodiment of this application. The method may include the following operations. In this embodiment of this application, a first communication apparatus may be a fusion center that can perform collaborative processing on communication apparatuses, or may be one of second communication apparatuses, and may be determined by the second communication apparatuses through negotiation.

S301: i second communication apparatuses send super-resolution capability information to the first communication apparatus.

Correspondingly, the first communication apparatus receives the super-resolution capability information from the i second communication apparatuses.

The super-resolution capability information may indicate sensing resolution of the second communication apparatus. For example, the super-resolution capability information may carry a value of the sensing resolution of the second communication apparatus, for example, carry one or more of range resolution, angular resolution, and velocity resolution. This is not specifically limited in this application.

It should be noted that a unit of the sensing resolution may be pre-agreed on. For example, a unit of the range resolution may be meter or centimeter, a unit of the angular resolution may be degree or radian, and a unit of the velocity resolution may be meter per second. This is not specifically limited in this application.

It may be understood that the range resolution, the angular resolution, and the velocity resolution are merely shown as examples. The sensing resolution may further include other resolutions, such as acceleration resolution and imaging resolution. This is not specifically limited in this application.

S302: The first communication apparatus obtains information about a super-resolution region.

The super-resolution region may be used to perform super-resolution sensing. For example, the super-resolution region may be used by the i second communication apparatuses to perform super-resolution sensing.

S303: The first communication apparatus sends the information about the super-resolution region.

For example, the first super-resolution region may send the information about the super-resolution region to the i second communication apparatuses.

In a possible implementation, the super-resolution region may be determined by a third communication apparatus with optimal sensing resolution in the i second communication apparatuses. For example, the third communication apparatus may obtain a target estimation result by performing echo signal processing, and determine the super-resolution region based on the target estimation result. For example, the third communication apparatus may use a maximum value of the target estimation result as a center of the super-resolution region, a lower limit of the super-resolution region is less than or equal to the maximum value of the target estimation result, and an upper limit of the super-resolution region is greater than or equal to the maximum value of the target estimation result. Optionally, the first communication apparatus may send the information about the super-resolution region to a second communication apparatus other than the third communication apparatus in the i second communication apparatuses.

It should be understood that the optimal sensing resolution may be understood as a minimum value of the sensing resolution. For example, optimal range resolution is a minimum value of range resolution sent by the i second communication apparatuses, optimal angular resolution is a minimum value of angular resolution sent by the i second communication apparatuses, and optimal velocity resolution is a minimum value of velocity resolution sent by the i second communication apparatuses.

In an example, the super-resolution region may include a range super-resolution region, a velocity super-resolution region, and an angular super-resolution region. The range super-resolution region may be determined by a communication apparatus m with the optimal range resolution, the velocity super-resolution region may be determined by a communication apparatus n with the optimal velocity resolution, and the angular super-resolution region may be determined by a communication apparatus k with the optimal angular resolution. The third communication apparatus may be one or more of the communication apparatuses m, n, and k.

In this embodiment of this application, the communication apparatus m, the communication apparatus n, and the communication apparatus k may be different communication apparatuses, or may be a same communication apparatus. In other words, there may be a plurality of third communication apparatuses. For example, the communication apparatus m may be a third communication apparatus with the optimal range resolution, the communication apparatus n may be a third communication apparatus with the optimal velocity resolution, and the communication apparatus k may be a third communication apparatus with the optimal angular resolution.

It may be understood that the range super-resolution region, the angular super-resolution region, and the velocity super-resolution region are merely shown as examples. The super-resolution region may further include other super-resolution regions, such as an acceleration super-resolution region and an imaging super-resolution region. This is not specifically limited in this application.

In S302, the first communication apparatus may obtain the information about the super-resolution region in two cases.

In a possible case, the first communication apparatus may receive, from the i second communication apparatuses, information about a super-resolution region separately determined by the i second communication apparatuses. A second communication apparatus L is used as an example. The second communication apparatus L may obtain a maximum value of a target estimation result by performing echo signal processing, for example, by using the monostatic signal fast processing procedure shown in FIG. 2, and therefore determine the super-resolution region based on the maximum value.

For example, the second communication apparatus L may determine a range super-resolution region. The second communication apparatus L may obtain a range peak value D by performing echo signal processing. A center of the range super-resolution region is the range peak value D, a lower limit d1 of the range super-resolution region is less than or equal to the range peak value, and an upper limit d2 of the range super-resolution region is greater than or equal to the range peak value. The second communication apparatus L may send information about the range super-resolution region to the first communication apparatus. For example, the second communication apparatus L may send {D, d1, d2} as the information about the range super-resolution region to the first communication apparatus.

It may be understood that d1 and d2 are not specifically limited in this application, and a relationship among d1, d2, and D may be pre-agreed on. For example, the second communication apparatus L may use a left endpoint of a corresponding width, when a peak power ratio is a preset value, for example, 3 dB, as d1, and use a right endpoint as d2, that is, 10 * log(P_{D}/P_{d1}) = 3 dB, and 10 * log(P_{D}/P_{d2}) = 3 dB. For another example, the second communication apparatus L may use a left endpoint of a width corresponding to a half of a peak power of a detection result as d1, and use a right endpoint as d2.

For another example, the second communication apparatus L may determine a velocity super-resolution region. The second communication apparatus L may obtain a velocity peak value, which is also referred to as a Doppler peak value V, by performing echo signal processing. A center of the velocity super-resolution region is the velocity peak value V, a lower limit v1 of the velocity super-resolution region is less than or equal to the velocity peak value V, and an upper limit v2 of the velocity super-resolution region is greater than or equal to the velocity peak value V. The second communication apparatus L may send information about the velocity super-resolution region to the first communication apparatus. For example, the second communication apparatus L may send {V, v1, v2} as the information about the range super-resolution region to the first communication apparatus.

It may be understood that v1 and v2 are not specifically limited in this application, and a relationship among v1, v2, and V may be pre-agreed on. For implementation, refer to d1 and d2. Details are not described herein again.

For another example, the second communication apparatus L may determine an angular super-resolution region. The second communication apparatus L may obtain an angular peak value by performing echo signal processing. Optionally, the angular peak value may be classified into an azimuth angle peak value Theta and an elevation angle peak value Phi. Optionally, the angular super-resolution region may also be classified into an azimuth angle super-resolution region and an elevation angle super-resolution region. A center of an angular super-resolution region 1, or in other words, the azimuth angle super-resolution region, is the azimuth angle peak value Theta, a lower limit theta1 of the angular super-resolution region 1 is less than or equal to the azimuth angle peak value Theta, and an upper limit theta2 of the angular super-resolution region 1 is greater than or equal to the azimuth angle peak value Theta. A center of an angular super-resolution region 2, or in other words, the elevation angle super-resolution region is the elevation angle peak value Phi. The center of the angular super-resolution region 2, or in other words, the elevation angle super-resolution region is the elevation angle peak value Phi, a lower limit phi1 of the angular super-resolution region 2 is less than or equal to the elevation angle peak value Phi, and an upper limit phi2 of the angular super-resolution region 2 is greater than or equal to the elevation angle peak value Phi. The second communication apparatus L may send information about the angular super-resolution region to the first communication apparatus. For example, the second communication apparatus L may send {Theta, theta1, theta2} and {Phi, phi1, phi2} as the information about the angular super-resolution region to the first communication apparatus.

It may be understood that theta1, theta2, phi1, and phi2 are not specifically limited in this embodiment of this application. A relationship among theta1, theta2, and Theta, and a relationship among phi1, phi2, and Phi may be pre-agreed on. For implementation, refer to d1 and d2. Details are not described herein again.

The i second communication apparatuses may determine the super-resolution region one by one with reference to the second communication apparatus L, and send the information about the super-resolution region to the first communication apparatus. For example, the i second communication apparatuses may send the information about the super-resolution region in S301. For another example, the i second communication apparatuses may separately send the super-resolution capability information and the information about the super-resolution region. This is not specifically limited in this application.

The first communication apparatus may determine information about a super-resolution region determined by a communication apparatus with optimal sensing resolution as the information about the super-resolution region sent in S303. For example, the first communication apparatus may determine the communication apparatus m with the optimal range resolution, and send information about a range super-resolution region determined by the communication apparatus m to a communication apparatus other than the communication apparatus m. For another example, the first communication apparatus may determine the communication apparatus n with the optimal velocity resolution, and send information about a velocity super-resolution region determined by the communication apparatus n to a communication apparatus other than the communication apparatus n. For another example, the first communication apparatus may determine the communication apparatus k with the optimal angular resolution, and send information about an angular super-resolution region determined by the communication apparatus k to a communication apparatus other than the communication apparatus k.

Based on the foregoing case, the first communication apparatus may obtain the information about the super-resolution region determined by the third communication apparatus with the optimal sensing resolution, to obtain the super-resolution region with high accuracy.

In another possible case, the first communication apparatus may send request information to the third communication apparatus, where the request information is used to request the super-resolution region. For example, the first communication apparatus may send request information to the communication apparatus m, where the request information is used to request the range super-resolution region. For another example, the first communication apparatus may send request information to the communication apparatus n, where the request information may be used to request the velocity super-resolution region. For another example, the first communication apparatus may send request information to the communication apparatus k, where the request information may be used to request the angular super-resolution region.

In this case, the third communication apparatus may obtain a maximum value of a target estimation result by performing echo signal processing, for example, by using the monostatic signal fast processing procedure shown in FIG. 2, and therefore determine the super-resolution region based on the maximum value. For example, the communication apparatus m may determine the range super-resolution region, and send the information about the range super-resolution region to the first communication apparatus. For implementation, refer to determining the range super-resolution region by the second communication apparatus L. Details are not described herein again. For another example, the communication apparatus n may determine the velocity super-resolution region, and send the information about the velocity super-resolution region to the first communication apparatus. For implementation, refer to determining the velocity super-resolution region by the second communication apparatus L. Details are not described herein again. For another example, the communication apparatus k may determine the angular super-resolution region, and send the information about the angular super-resolution region to the first communication apparatus. For implementation, refer to determining the angular super-resolution region by the second communication apparatus L. Details are not described herein again.

Based on the foregoing case, the first communication apparatus may determine the third communication apparatus with the optimal sensing resolution, and send the request information to the third communication apparatus to obtain the super-resolution region. In comparison with each second communication apparatus sending the super-resolution region determined by the second communication apparatus to the first communication apparatus, transmission resources can be saved.

Optionally, the embodiment shown in FIG. 3 may further include the following operation S304.

S304: The second communication apparatus performs super-resolution sensing in the super-resolution region.

For example, the second communication apparatus may perform range super-resolution sensing in the range super-resolution region. For another example, the second communication apparatus may perform angular super-resolution sensing in the angular super-resolution region. For another example, the second communication apparatus may perform velocity super-resolution sensing in the velocity super-resolution region.

In a possible implementation, the second communication apparatus may receive a super-resolution multiple from the first communication apparatus, and the second communication apparatus may perform super-resolution sensing based on the super-resolution multiple. To enable the communication apparatuses to be aligned with same sensing resolution, the first communication apparatus may send the super-resolution multiple to the i second communication apparatuses. The super-resolution multiple is determined based on the optimal sensing resolution. For example, a range super-resolution multiple is determined based on the optimal range resolution. For another example, an angular super-resolution multiple is determined based on the optimal angular resolution. For another example, a velocity super-resolution multiple is determined based on the optimal velocity resolution.

In an example, the first communication apparatus may determine the super-resolution multiple Y = int(sensing resolution/optimal sensing resolution), where "int" represents a rounding operation. For example, range resolution of a communication apparatus 1 is 1 m, and optimal range resolution is 0.1 m. In this case, the first communication apparatus may determine a range super-resolution multiple of the communication apparatus 1: Y = int(1\0.1) = 10, that is, 10 times.

It may be understood that, the first communication apparatus may compare the determined super-resolution multiple of the communication apparatus with an upper limit of the super-resolution multiple of the communication apparatus. Optionally, the upper limit of the super-resolution multiple may be sent by the communication apparatus to the first communication apparatus, for example, carried in the super-resolution capability information and sent to the first communication apparatus. If Y is greater than the upper limit of the super-resolution multiple of the communication apparatus, the super-resolution multiple sent by the first communication apparatus to the communication apparatus is the upper limit of the super-resolution multiple of the communication apparatus. If Y is less than or equal to the upper limit of the super-resolution multiple of the communication apparatus, the super-resolution multiple sent by the first communication apparatus to the communication apparatus is Y.

For example, the range super-resolution multiple of the communication apparatus 1 determined by the first communication apparatus is 10 times, an angular super-resolution multiple of the communication apparatus 1 is 20 times, and a velocity super-resolution multiple of the communication apparatus 1 is 5 times. An upper limit of the range super-resolution multiple of the communication apparatus 1 is 15 times, an upper limit of the angular super-resolution multiple of the communication apparatus 1 is 15 times, and the velocity super-resolution multiple of the communication apparatus 1 is 15 times. Because the range super-resolution multiple of the communication apparatus 1 determined by the first communication apparatus is 10 times, and is less than the upper limit 15 times of the range super-resolution multiple, the range super-resolution multiple sent by the first communication apparatus to the communication apparatus 1 is 10 times. Similarly, because the velocity super-resolution multiple of the communication apparatus 1 determined by the first communication apparatus is 5 times, and is less than the upper limit 15 times of the velocity super-resolution multiple, the range super-resolution multiple sent by the first communication apparatus to the communication apparatus 1 is 5 times. Similarly, because the angular super-resolution multiple of the communication apparatus 1 determined by the first communication apparatus is 20 times, and is greater than the upper limit 15 times of the angular super-resolution multiple, the angular super-resolution multiple sent by the first communication apparatus to the communication apparatus 1 is 15 times.

Based on the foregoing solution, the first communication apparatus determines the super-resolution multiple of each second communication apparatus based on the optimal sensing resolution, so that the super-resolution multiple of the second communication apparatus can be aligned, to improve consistency of sensing results of a system.

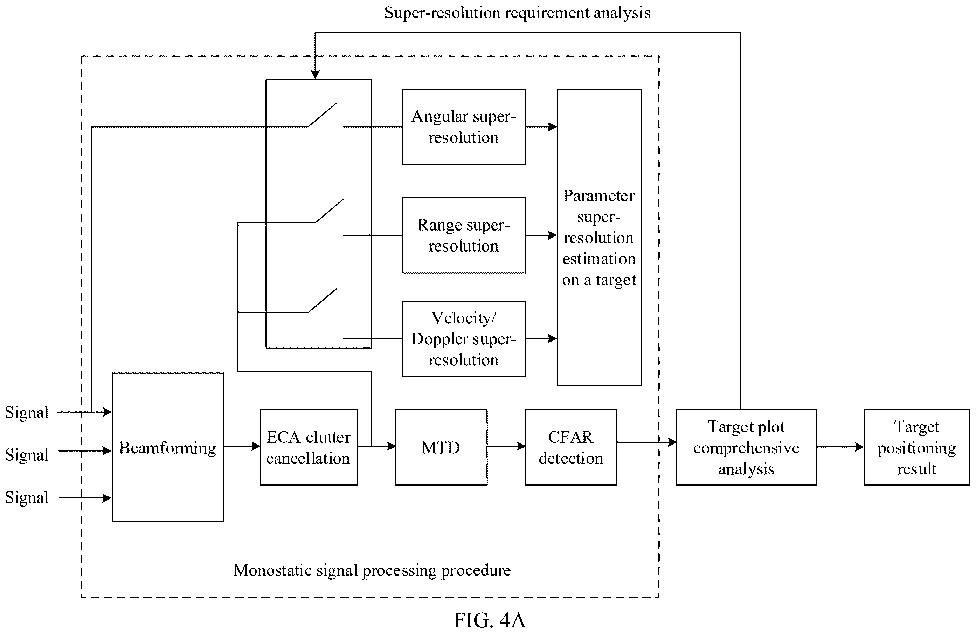

FIG. 4A is a block diagram of a procedure in which a communication apparatus performs sensing. As shown in FIG. 4A, the communication apparatus may process an echo signal, and obtain a parameter estimation result of a target. The communication apparatus may obtain information about a super-resolution sensing region by using the procedure shown in FIG. 3. For example, the communication apparatus may receive information about an angular super-resolution region from a first communication apparatus. In this case, the communication apparatus may determine that angular super-resolution sensing needs to be performed, and the communication apparatus may perform angular super-resolution sensing in the angular super-resolution region. For another example, the communication apparatus may receive information about a velocity super-resolution region from the first communication apparatus. In this case, the communication apparatus may determine that velocity super-resolution sensing needs to be performed, and the communication apparatus may perform velocity super-resolution sensing in the velocity super-resolution region. For another example, the communication apparatus may receive information about a range super-resolution region from the first communication apparatus. In this case, the communication apparatus may determine that range super-resolution sensing needs to be performed, and the communication apparatus may perform velocity super-resolution sensing in the range super-resolution region.

It may be understood that, because the super-resolution sensing area is determined by a third communication apparatus, the third communication apparatus may not perform super-resolution sensing. For example, a communication apparatus m may not perform range super-resolution sensing. Optionally, the communication apparatus m may perform angular super-resolution sensing in the angular super-resolution region, and perform velocity super-resolution sensing in the velocity super-resolution region. Similarly, a communication apparatus n may not perform velocity super-resolution sensing, and the communication apparatus n may perform range super-resolution sensing in the range super-resolution region, and perform angular super-resolution sensing in the angular super-resolution region. Similarly, a communication apparatus k may not perform angular super-resolution sensing, and the communication apparatus k may perform range super-resolution sensing in the range super-resolution region, and perform velocity super-resolution sensing in the velocity super-resolution region.

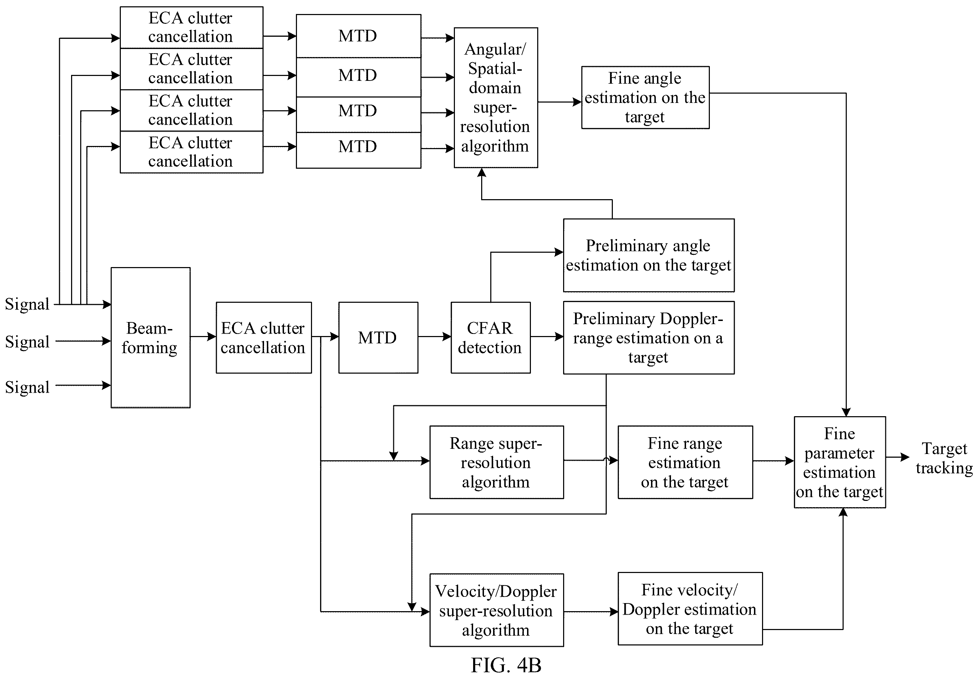

FIG. 4B shows a procedure in which a communication apparatus performs super-resolution sensing. Based on the embodiment shown in FIG. 3, the communication apparatus may determine a super-resolution region, for example, a range super-resolution region, a velocity super-resolution region, and an angular super-resolution region. The communication apparatus may perform super-resolution based on the super-resolution region.

Refer to FIG. 4B. If range super-resolution estimation is needed, preliminary range estimation on a target obtained based on echo signal processing is used as prior information, a super-resolution algorithm is used to perform range super-resolution estimation, and a super-resolution result is used to update range estimation on the target. For another example, if velocity super-resolution estimation is needed, preliminary velocity estimation of a target obtained based on echo signal processing is used as prior information, a super-resolution algorithm is used to perform velocity super-resolution estimation, and a super-resolution result is used to update velocity estimation on the target. For another example, if angular super-resolution estimation is needed, original data of an array needs to be invoked, then an accumulation result corresponding to each array element is extracted based on range and Doppler information of a target, angular super-resolution estimation is performed on a region of interest near a center by using angle information of the target obtained based on echo signal processing as the center, and a super-resolution result is used to update angle estimation on the target. The communication apparatus may calculate and update a status of the target based on updated angle and range super-resolution estimation information of the target. Based on the foregoing solution, a super-resolution problem scale can be reduced, operation complexity can be reduced, and running efficiency can be improved.

It should be noted that the communication apparatus may perform super-resolution estimation by using a multiple signal classification algorithm based on a subspace method, a minimum unbiased estimation (Capon) algorithm, an orthogonal matching pursuit algorithm, an iterative adaptive approach, a sparse Bayesian method, a convex optimization algorithm based on L1 norm minimization, a convex optimization algorithm based on atomic norm minimization, and the like. The super-resolution algorithm used by the communication apparatus is not limited in this embodiment of this application.

Optionally, the embodiment shown in FIG. 3 may further include the following operation S305.

S305: The second communication apparatus sends a sensing result to the first communication apparatus.

Correspondingly, the first communication apparatus receives the sensing result from the second communication apparatus.

The first communication apparatus may perform positioning and velocity measurement on the target based on a sensing result of each second communication apparatus, and determine information such as a position and a velocity of the target.

It should be noted that, in the foregoing solution provided in this embodiment of this application, because a sensing scenario changes, information such as a communication apparatus with optimal sensing resolution, a super-resolution sensing region, and a super-resolution multiple also dynamically changes. In this embodiment of this application, the first communication apparatus may indicate the second communication apparatus to separately perform super-resolution sensing in a range dimension, an angle dimension, or a velocity dimension; or the first communication apparatus may indicate the second communication apparatus to perform super-resolution sensing in a range dimension and an angle dimension, or in a range dimension and a velocity dimension, or in an angle dimension and a velocity dimension; or the first communication apparatus may indicate the second communication apparatus to perform super-resolution sensing in a range dimension, an angle dimension, and a velocity dimension.

The first communication apparatus may send the super-resolution region to the second communication apparatus, to indicate the second communication apparatus to perform super-resolution sensing. For example, if the first communication apparatus sends the range super-resolution region to the second communication apparatus, it may be considered that the first communication apparatus indicates the second communication apparatus to perform range super-resolution sensing in the range super-resolution region.

The following describes, with reference to the accompanying drawings, the communication apparatus provided in embodiments of this application.

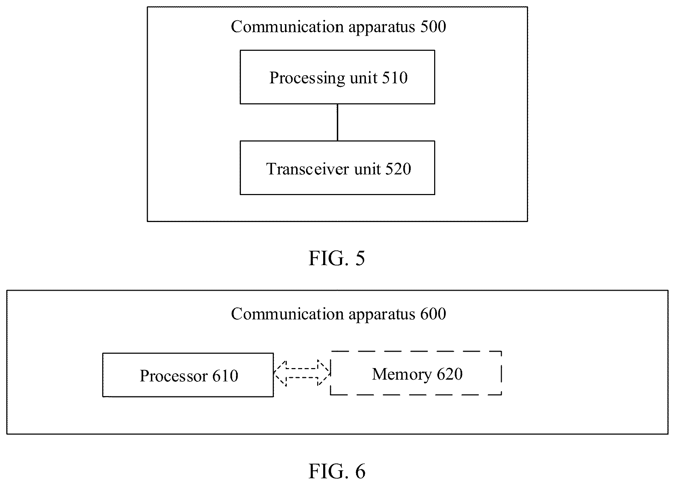

FIG. 5 is a block diagram of a communication apparatus 500 according to an embodiment of this application. The communication apparatus 500 may correspondingly implement functions or steps implemented by the terminal device or the network device in the foregoing method embodiments. The communication apparatus may include a processing unit 510 and a transceiver unit 520. Optionally, the communication apparatus may further include a storage unit. The storage unit may be configured to store instructions (code or a program) and/or data. The processing unit 510 and the transceiver unit 520 may be coupled to the storage unit. For example, the processing unit 510 may read the instructions (the code or the program) and/or the data in the storage unit, to implement a corresponding method. The foregoing units may be independently disposed, or may be partially or all integrated.

Optionally, the transceiver unit 520 may include a sending unit and a receiving unit. The sending unit may be configured to perform all sending operations performed by the communication apparatus 500, and the receiving unit may be configured to perform all receiving operations performed by the communication apparatus 500.

In some possible implementations, the communication apparatus 500 can correspondingly implement behavior and functions of the first communication apparatus in the foregoing method embodiments. The transceiver unit 520 may be configured to perform all receiving or sending operations performed by the first communication apparatus in the embodiment shown in FIG. 3, for example, S301, S303, and S305 in the embodiment shown in FIG. 3, and/or another process used to support the technology described in this specification. The processing unit 510 is configured to perform all operations performed by the first communication apparatus in the embodiment shown in FIG. 3 except the receiving and sending operations, for example, S302 in the embodiment shown in FIG. 3, and/or another process used to support the technology described in this specification.

For example, the transceiver unit 520 is configured to receive super-resolution capability information from i second communication apparatuses, where the super-resolution capability information indicates sensing resolution of the second communication apparatus, and i is an integer greater than or equal to 2. The processing unit 510 is configured to obtain information about a super-resolution region, where the super-resolution region is used by the i second communication apparatuses to perform super-resolution sensing, and the super-resolution region is determined by a third communication apparatus with optimal sensing resolution in the i second communication apparatuses. The transceiver unit 520 is further configured to send the information about the super-resolution region.

In some possible implementations, the communication apparatus 500 can correspondingly implement behavior and functions of the second communication apparatus in the foregoing method embodiments. The transceiver unit 520 may be configured to perform all receiving or sending operations performed by the second communication apparatus in the embodiment shown in FIG. 3, for example, S301, S303, and S305 in the embodiment shown in FIG. 3, and/or another process used to support the technology described in this specification. The processing unit 510 is configured to perform all operations performed by the second communication apparatus in the embodiment shown in FIG. 3 except the receiving and sending operations, for example, S304 in the embodiment shown in FIG. 3, and/or another process used to support the technology described in this specification.

For example, the transceiver unit 520 is configured to send super-resolution capability information to a first communication apparatus, where the super-resolution capability information indicates sensing resolution of the second communication apparatus, and the sensing resolution is used to determine optimal sensing resolution. The transceiver unit 520 is further configured to receive information about a super-resolution region from the first communication apparatus, where the super-resolution region is used by the communication apparatus to perform super-resolution sensing, and the super-resolution region is determined by a third communication apparatus with the optimal sensing resolution. The processing unit 510 is configured to perform super-resolution sensing in the super-resolution region. The transceiver unit 520 is further configured to send a sensing result to the first communication apparatus, where the sensing result is obtained by the communication apparatus by performing super-resolution sensing in the super-resolution region.

In some possible implementations, the communication apparatus 500 can correspondingly implement behavior and functions of the third communication apparatus in the foregoing method embodiments. The transceiver unit 520 may be configured to perform all receiving or sending operations performed by the third communication apparatus in the embodiment shown in FIG. 3, for example, S301 in the embodiment shown in FIG. 3, and/or another process used to support the technology described in this specification. The processing unit 510 is configured to perform all operations performed by the third communication apparatus in the embodiment shown in FIG. 3 except the receiving and sending operations.

For example, the transceiver unit 520 is configured to send super-resolution capability information to a first communication apparatus, where the super-resolution capability information indicates sensing resolution of the third communication apparatus, and the sensing resolution of the communication apparatus is optimal. The processing unit 510 is configured to determine information about a super-resolution region, where the super-resolution region is used to perform super-resolution sensing. The transceiver unit 520 is further configured to send the information about the super-resolution region to the first communication apparatus.

For operations performed by the processing unit 510 and the transceiver unit 520, refer to the related descriptions in the foregoing method embodiments.

It should be understood that the processing unit 510 in this embodiment of this application may be implemented as a processor or a processor-related circuit component, and the transceiver unit 520 may be implemented as a transceiver, a transceiver-related circuit component, or a communication interface.

Based on a same concept, as shown in FIG. 6, an embodiment of this application provides a communication apparatus 600. The communication apparatus 600 includes a processor 610. Optionally, the communication apparatus 600 may further include a memory 620, configured to store instructions executed by the processor 610, input data needed by the processor 610 to run instructions, or data generated after the processor 610 runs instructions. The processor 610 may implement the methods shown in the foregoing method embodiments by using the instructions stored in the memory 620.

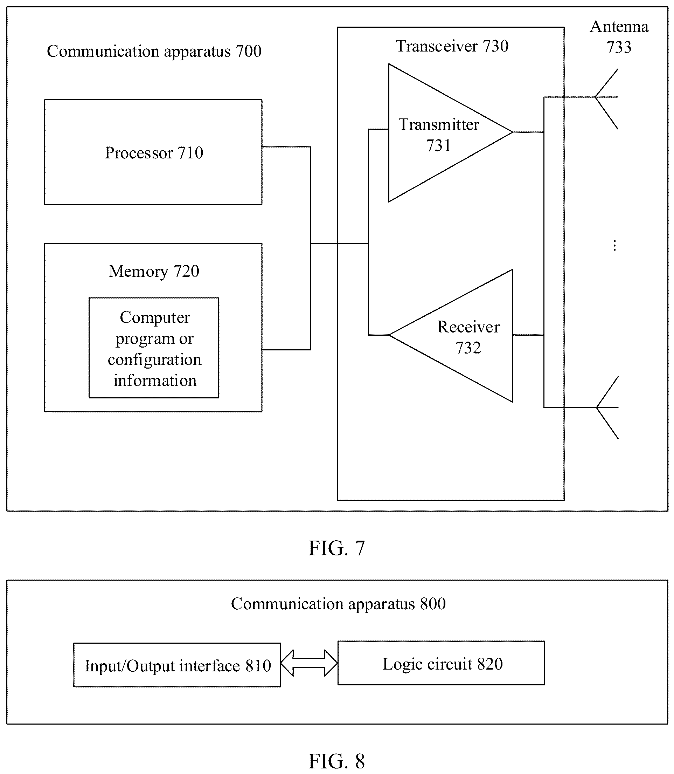

Based on a same concept, as shown in FIG. 7, an embodiment of this application provides a communication apparatus 700. The communication apparatus 700 may be a chip or a chip system. Optionally, in this embodiment of this application, the chip system may include a chip, or may include a chip and another discrete component.

The communication apparatus 700 may include at least one processor 710. The processor 710 is coupled to a memory. Optionally, the memory may be located inside the apparatus, or may be located outside the apparatus. For example, the communication apparatus 700 may further include at least one memory 720. The memory 720 stores a computer program, configuration information, a computer program or instructions, and/or data necessary for implementing any one of the foregoing embodiments. The processor 710 may execute the computer program stored in the memory 720, to implement the method in any one of the foregoing embodiments.

The coupling in this embodiment of this application may be an indirect coupling or a communication connection between apparatuses, units, or modules in an electrical form, a mechanical form, or another form, and is used for information exchange between the apparatuses, the units, or the modules. The processor 710 may cooperate with the memory 720. A specific connection medium between a transceiver 730, the processor 710, and the memory 720 is not limited in this embodiment of this application.

The communication apparatus 700 may further include the transceiver 730, and the communication apparatus 700 may exchange information with another device via the transceiver 730. The transceiver 730 may be a circuit, a bus, a transceiver, or any other apparatus that can be configured to exchange information, and is also referred to as a signal transceiver unit. As shown in FIG. 7, the transceiver 730 includes a transmitter 731, a receiver 732, and an antenna 733. In addition, when the communication apparatus 700 is a chip type apparatus or circuit, the transceiver in the communication apparatus 700 may alternatively be an input/output circuit and/or a communication interface, and may input data (is also referred to as receiving data) and output data (is also referred to as sending data). The processor is an integrated processor, a microprocessor, or an integrated circuit, and the processor may determine output data based on input data.

In a possible implementation, the communication apparatus 700 may be used for a first communication apparatus. Specifically, the communication apparatus 700 may be the first communication apparatus, or may be an apparatus that can support the first communication apparatus to implement a function of the first communication apparatus in any one of the foregoing embodiments. The memory 720 stores a necessary computer program, a computer program or instructions, and/or data for implementing a function of the first communication apparatus in any one of the foregoing embodiments. The processor 710 may execute the computer program stored in the memory 720, to implement the method performed by the first communication apparatus in any one of the foregoing embodiments.

In a possible implementation, the communication apparatus 700 may be used for a second communication apparatus. Specifically, the communication apparatus 700 may be the second communication apparatus, or may be an apparatus that can support the network device to implement a function of the second communication apparatus in any one of the foregoing embodiments. The memory 720 stores a necessary computer program, a computer program or instructions, and/or data for implementing a function of the second communication apparatus in any one of the foregoing embodiments. The processor 710 may execute the computer program stored in the memory 720, to implement the method performed by the second communication apparatus in any one of the foregoing embodiments.

In a possible implementation, the communication apparatus 700 may be used for a third communication apparatus. Specifically, the communication apparatus 700 may be the third communication apparatus, or may be an apparatus that can support the network device to implement a function of the third communication apparatus in any one of the foregoing embodiments. The memory 720 stores a necessary computer program, a computer program or instructions, and/or data for implementing a function of the third communication apparatus in any one of the foregoing embodiments. The processor 710 may execute the computer program stored in the memory 720, to implement the method performed by the third communication apparatus in any one of the foregoing embodiments.

The communication apparatus 700 provided in this embodiment may be used for the first communication apparatus to implement the method performed by the first communication apparatus, or may be used for the second communication apparatus to implement the method performed by the second communication apparatus, or may be used for the third communication apparatus to implement the method performed by the third communication apparatus. Therefore, for technical effect that can be achieved by the communication apparatus, refer to the foregoing method embodiments. Details are not described herein again.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction structure or a data structure and that can be accessed by a computer, but is not limited thereto. The memory in embodiments of this application may alternatively be a circuit or any other apparatus that can implement a storage function, and is configured to store a computer program, a computer program or instructions, and/or data.

Based on the foregoing embodiments, with reference to FIG. 8, an embodiment of this application further provides another communication apparatus 800, including an input/output interface 810 and a logic circuit 820. The input/output interface 810 is configured to receive code instructions and transmit the code instructions to the logic circuit 820. The logic circuit 820 is configured to run the code instructions to perform the method performed by the first communication apparatus, the second communication apparatus, or the third communication apparatus in any one of the foregoing embodiments.

Optionally, the input/output interface 810 may be an interface on a chip, and the logic circuit 820 may be one or more processors. Optionally, the one or more processors may be located inside the apparatus, or may be located outside the apparatus.

The following describes in detail operations performed by the communication apparatus used for the first communication apparatus, the second communication apparatus, or the third communication apparatus.

In an optional implementation, the communication apparatus 800 may be used for the first communication apparatus to perform the method performed by the first communication apparatus, specifically, for example, the method performed by the first communication apparatus in the embodiment shown in FIG. 3.

For example, the input/output interface 810 is configured to input super-resolution capability information from i second communication apparatuses, where the super-resolution capability information indicates sensing resolution of the second communication apparatus, and i is an integer greater than or equal to 2. The logic circuit 820 is configured to obtain information about a super-resolution region, where the super-resolution region is used by the i second communication apparatuses to perform super-resolution sensing, and the super-resolution region is determined by a third communication apparatus with optimal sensing resolution in the i second communication apparatuses. The input/output interface 810 is further configured to output the information about the super-resolution region.

The communication apparatus 800 provided in this embodiment may be used for the first communication apparatus to implement the method performed by the first communication apparatus. Therefore, for technical effect that can be achieved by the communication apparatus, refer to the foregoing method embodiments. Details are not described herein again.

In an optional implementation, the communication apparatus 800 may be used for the second communication apparatus to perform the method performed by the second communication apparatus, specifically, for example, the method performed by the second communication apparatus in the embodiment shown in FIG. 3.

For example, the input/output interface 810 is configured to output super-resolution capability information, where the super-resolution capability information indicates sensing resolution of the second communication apparatus, and the sensing resolution is used to determine optimal sensing resolution. The input/output interface 810 is further configured to input information about a super-resolution region from the first communication apparatus, where the super-resolution region is used by the communication apparatus to perform super-resolution sensing, and the super-resolution region is determined by a third communication apparatus with the optimal sensing resolution. The logic circuit 820 is configured to perform super-resolution sensing in the super-resolution region. The input/output interface 810 is further configured to output a sensing result, where the sensing result is obtained by the communication apparatus by performing super-resolution sensing in the super-resolution region.

The communication apparatus 800 provided in this embodiment may be used for the second communication apparatus to implement the method performed by the second communication apparatus. Therefore, for technical effect that can be achieved by the communication apparatus, refer to the foregoing method embodiments. Details are not described herein again.

In an optional implementation, the communication apparatus 800 may be used for the third communication apparatus to perform the method performed by the third communication apparatus, specifically, for example, the method performed by the third communication apparatus in the embodiment shown in FIG. 3.

For example, the input/output interface 810 is configured to output super-resolution capability information, where the super-resolution capability information indicates sensing resolution of the third communication apparatus, and the sensing resolution of the communication apparatus is optimal. The logic circuit 820 is configured to determine information about a super-resolution region, where the super-resolution region is used to perform super-resolution sensing. The input/output interface 810 is further configured to output the information about the super-resolution region.

The communication apparatus 800 provided in this embodiment may be used for the third communication apparatus to implement the method performed by the third communication apparatus. Therefore, for technical effect that can be achieved by the communication apparatus, refer to the foregoing method embodiments. Details are not described herein again.

Based on the foregoing embodiments, an embodiment of this application further provides a communication system. The communication system includes at least one first communication apparatus and at least one second communication apparatus. Optionally, the communication system may further include at least one third communication system. For technical effect that can be achieved, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the terminal device or the method performed by the network device in any one of the foregoing embodiments is implemented. The computer-readable storage medium may include any medium that can store program code, such as a USB flash drive, a removable hard disk drive, a read-only memory, a random access memory, a magnetic disk, or an optical disc.

To implement the functions of the communication apparatuses in FIG. 5 to FIG. 8, an embodiment of this application further provides a chip, including a processor, configured to support the communication apparatus in implementing the functions of the terminal device or the network device in the foregoing method embodiments. In a possible design, the chip is connected to a memory, or the chip includes a memory. The memory is configured to store a computer program or instructions and data that are necessary for the communication apparatus.

A person skilled in the art is to understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specified function in one or more procedures in the flowcharts and/or in one or more blocks in the block diagrams.

The computer program or the instructions may alternatively be stored in a computer-readable memory that can indicate the computer or the another programmable data processing device to operate in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specified function in one or more procedures in the flowcharts and/or in one or more blocks in the block diagrams.

It is clear that a person skilled in the art may make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. A sensing method, comprising:
receiving, by a first communication apparatus, super-resolution capability information from i second communication apparatuses, wherein the super-resolution capability information indicates sensing resolution of the second communication apparatus, and i is an integer greater than or equal to 2;
obtaining, by the first communication apparatus, information about a super-resolution region, wherein the super-resolution region is used by the i second communication apparatuses to perform super-resolution sensing, and the super-resolution region is determined by a third communication apparatus with optimal sensing resolution in the i second communication apparatuses; and
sending, by the first communication apparatus, the information about the super-resolution region.

2. The method according to claim 1, wherein obtaining, by the first communication apparatus, the information about the super-resolution region comprises:
sending, by the first communication apparatus, request information to the third communication apparatus, wherein the request information is used to request the information about the super-resolution region; and
receiving, by the first communication apparatus, the information about the super-resolution region from the third communication apparatus.

3. The method according to claim 2, wherein sending, by the first communication apparatus, the information about the super-resolution region comprises:
sending, by the first communication apparatus, the information about the super-resolution region to a second communication apparatus other than the third communication apparatus in the i second communication apparatuses.

4. The method according to any one of claims 1 to 3, wherein the sensing resolution comprises one or more of range resolution, velocity resolution, and angular resolution, and the super-resolution region comprises one or more of a range super-resolution region, an angular super-resolution region, and a velocity super-resolution region.

5. The method according to claim 4, wherein the third communication apparatus meets one or more of the following conditions:
angular resolution in the i second communication apparatuses is optimal, range resolution in the i second communication apparatuses is optimal, and velocity resolution in the i second communication apparatuses is optimal.

6. The method according to any one of claims 1 to 5, wherein there are one or more third communication apparatuses.

7. The method according to claim 4 or 5, wherein the super-resolution region is determined based on a peak value, and the peak value is a maximum value of a target estimation result obtained by the third communication apparatus by performing echo signal processing.

8. The method according to claim 7, wherein that the super-resolution region is determined based on the peak value comprises one or more of the following:
the super-resolution region comprises the range super-resolution region, a center of the range super-resolution region is a range peak value obtained by the third communication apparatus by performing echo signal processing, a lower limit of the range super-resolution region is less than or equal to the range peak value, and an upper limit of the range super-resolution region is greater than or equal to the range peak value;
the super-resolution region comprises the velocity super-resolution region, a center of the velocity super-resolution region is a velocity peak value obtained by the third communication apparatus by performing echo signal processing, a lower limit of the velocity super-resolution region is less than or equal to the velocity peak value, and an upper limit of the velocity super-resolution region is greater than or equal to the velocity peak value; or
the super-resolution region comprises the angular super-resolution region, a center of the angular super-resolution region is an angular peak value obtained by the third communication apparatus by performing echo signal processing, a lower limit of the angular super-resolution region is less than or equal to the target angle, and an upper limit of the angular super-resolution region is greater than or equal to the angular peak value.

9. The method according to any one of claims 1 to 8, further comprising:
sending, by the first communication apparatus, a super-resolution multiple, wherein the super-resolution multiple is determined based on the optimal sensing resolution.

10. The method according to any one of claims 1 to 9, further comprising:
receiving, by the first communication apparatus, sensing results from the i second communication apparatuses, wherein the sensing results are obtained by the i second communication apparatuses by performing super-resolution sensing in the super-resolution region.

11. A sensing method, comprising:
sending, by a second communication apparatus, super-resolution capability information to a first communication apparatus, wherein the super-resolution capability information indicates sensing resolution of the second communication apparatus, and the sensing resolution is used to determine optimal sensing resolution;
receiving, by the second communication apparatus, information about a super-resolution region from the first communication apparatus, wherein the super-resolution region is used by the second communication apparatus to perform super-resolution sensing, and the super-resolution region is determined by a third communication apparatus with the optimal sensing resolution; and
sending, by the second communication apparatus, a sensing result to the first communication apparatus, wherein the sensing result is obtained by the second communication apparatus by performing super-resolution sensing in the super-resolution region.

12. The method according to claim 11, further comprising:
receiving, by the second communication apparatus, a super-resolution multiple from the first communication apparatus, wherein the super-resolution multiple is determined based on the sensing resolution, and the sensing result is obtained by the second communication apparatus by performing super-resolution sensing in the super-resolution region by using the super-resolution multiple.

13. The method according to claim 11 or 12, wherein the sensing resolution comprises one or more of range resolution, velocity resolution, and angular resolution, and the super-resolution region comprises one or more of a range super-resolution region, an angular super-resolution region, and a velocity super-resolution region.

14. The method according to claim 13, wherein the super-resolution region is determined based on a peak value, and the peak value is a maximum value of a target estimation result obtained by the third communication apparatus by performing echo signal processing.

15. The method according to claim 14, wherein that the super-resolution region is determined based on the peak value comprises one or more of the following:
the super-resolution region comprises the range super-resolution region, a center of the range super-resolution region is a range peak value obtained by the third communication apparatus by performing echo signal processing, a lower limit of the range super-resolution region is less than or equal to the range peak value, and an upper limit of the range super-resolution region is greater than or equal to the range peak value;
the super-resolution region comprises the velocity super-resolution region, a center of the velocity super-resolution region is a velocity peak value obtained by the third communication apparatus by performing echo signal processing, a lower limit of the velocity super-resolution region is less than or equal to the velocity peak value, and an upper limit of the velocity super-resolution region is greater than or equal to the velocity peak value; or
the super-resolution region comprises the angular super-resolution region, a center of the angular super-resolution region is an angular peak value obtained by the third communication apparatus by performing echo signal processing, a lower limit of the angular super-resolution region is less than or equal to the target angle, and an upper limit of the angular super-resolution region is greater than or equal to the angular peak value.

16. A sensing method, further comprising:
sending, by a third communication apparatus, super-resolution capability information to a first communication apparatus, wherein the super-resolution capability information indicates sensing resolution of the third communication apparatus, and the sensing resolution of the third communication apparatus is optimal; and
sending, by the third communication apparatus, information about a super-resolution region to the first communication apparatus, wherein the super-resolution region is used to perform super-resolution sensing.

17. The method according to claim 16, further comprising:
receiving, by the third communication apparatus, request information from the first communication apparatus, wherein the request information is used to request the information about the super-resolution region.

18. The method according to claim 16 or 17, wherein the sensing resolution comprises one or more of range resolution, velocity resolution, and angular resolution, and the super-resolution region comprises one or more of a range super-resolution region, an angular super-resolution region, and a velocity super-resolution region.

19. The method according to claim 18, wherein the super-resolution region is determined based on a peak value, and the peak value is a maximum value of a target estimation result obtained by the third communication apparatus by performing echo signal processing.

20. The method according to claim 19, wherein that the super-resolution region is determined based on the peak value comprises one or more of the following:
the super-resolution region comprises the range super-resolution region, a center of the range super-resolution region is a range peak value obtained by the third communication apparatus by performing echo signal processing, a lower limit of the range super-resolution region is less than or equal to the range peak value, and an upper limit of the range super-resolution region is greater than or equal to the range peak value;
the super-resolution region comprises the velocity super-resolution region, a center of the velocity super-resolution region is a velocity peak value obtained by the third communication apparatus by performing echo signal processing, a lower limit of the velocity super-resolution region is less than or equal to the velocity peak value, and an upper limit of the velocity super-resolution region is greater than or equal to the velocity peak value; or
the super-resolution region comprises the angular super-resolution region, a center of the angular super-resolution region is an angular peak value obtained by the third communication apparatus by performing echo signal processing, a lower limit of the angular super-resolution region is less than or equal to the target angle, and an upper limit of the angular super-resolution region is greater than or equal to the angular peak value.

21. The method according to any one of claims 18 to 20, further comprising:
receiving, by the third communication apparatus, the angular super-resolution region and the velocity super-resolution region from the first communication apparatus, and performing, by the third communication apparatus, super-resolution sensing in the angular super-resolution region and the velocity super-resolution region, wherein the super-resolution region comprises the range super-resolution region;
receiving, by the third communication apparatus, the range super-resolution region and the velocity super-resolution region from the first communication apparatus, and performing, by the third communication apparatus, super-resolution sensing in the range super-resolution region and the velocity super-resolution region, wherein the super-resolution region comprises the angular super-resolution region;
receiving, by the third communication apparatus, the angular super-resolution region and the range super-resolution region from the first communication apparatus, and performing, by the third communication apparatus, super-resolution sensing in the angular super-resolution region and the range super-resolution region, wherein the super-resolution region comprises the velocity super-resolution region;
receiving, by the third communication apparatus, the velocity super-resolution region from the first communication apparatus, and performing, by the third communication apparatus, super-resolution sensing in the velocity super-resolution region, wherein the super-resolution region comprises the range super-resolution region and the angular super-resolution region;
receiving, by the third communication apparatus, the angular super-resolution region from the first communication apparatus, and performing, by the third communication apparatus, super-resolution sensing in the angular super-resolution region, wherein the super-resolution region comprises the range super-resolution region and the velocity super-resolution region; or
receiving, by the third communication apparatus, the range super-resolution region from the first communication apparatus, and performing, by the third communication apparatus, super-resolution sensing in the range super-resolution region, wherein the super-resolution region comprises the angular super-resolution region and the velocity super-resolution region.

22. A communication apparatus, comprising a unit configured to perform the method according to any one of claims 1 to 10.

23. A communication apparatus, comprising a unit configured to perform the method according to any one of claims 11 to 15.

24. A communication apparatus, comprising a unit configured to perform the method according to any one of claims 16 to 21.

25. A computer-readable storage medium, wherein the computer-readable storage medium stores computer-executable instructions, and when the computer-executable instructions are invoked by an electronic apparatus, the electronic apparatus is enabled to perform the method according to any one of claims 1 to 10, the electronic apparatus is enabled to perform the method according to any one of claims 11 to 15, or the electronic apparatus is enabled to perform the method according to any one of claims 16 to 21.

26. A communication system, comprising an apparatus configured to perform the method according to any one of claims 1 to 10 and an apparatus configured to perform the method according to any one of claims 11 to 15.

27. The communication system according to claim 26, wherein the communication system further comprises an apparatus configured to perform the method according to any one of claims 16 to 21.

28. A chip system, wherein the chip system comprises:
a communication interface; and
a processor, configured to invoke and run the instructions through the communication interface, so that a device on which the chip system is installed performs the method according to any one of claims 1 to 10, a device on which the chip system is installed performs the method according to any one of claims 11 to 15, or a device on which the chip system is installed performs the method according to any one of claims 16 to 21.
